# EUROPEAN PATENT APPLICATION

(11) **EP 1 768 366 A1**
(43) Date of publication of application: **28.03.2007**
(21) Application number: 05077215.1
(22) Date of filing: 27.09.2005
(51) Int. Cl.: H04M 3/42, H04L 29/08

(54) **Determination of presence information about a presentity by analysing an audio signal from a terminal associated with the presentity**

(71) Applicant: Nederlandse Organisatie voor Toegepast Wetenschappelijk Onderzoek TNO, 2628 VK The Hague (NL)
(72) Inventor: van Deventer, Mattijs Oskar, 2264 DL Leidschendam (NL)
(74) Representative: Winckels, Johannes Hubertus F.

(57) **Abstract**

The invention relates to a method of determining presence information about at least one presentity. In particular, the invention is concerned with a method of determining presence information about at least one presentity, the method comprising: accessing an audio signal from a terminal associated with the at least one presentity, analysing the audio signal to determine information regarding the presence of the at least one presentity, providing the presence information as a presence service to a third party. The invention further relates to a presence service system, a user terminal comprising means operable to perform the method of the invention, a communications network comprising a terminal, the presence service system being operable to perform the method of the invention and a computer readable storage medium storing a program which when run on a computer controls the computer to perform the method of the invention.

## Description

### Technical Field

The invention relates to a method of determining presence information about at least one presentity and a presence service system.

### Background to the Invention and Prior Art

Systems are known which provide a presence service to users. A presence service allows users to subscribe to each other and be notified of each others presence or otherwise. Presence services determine and provide presence information which is information regarding the presence of an entity. A presence service typically has two distinct sets of clients. One set of clients is referred to in the art as presentities. A presentity is an entity whose presence information is determined and typically stored. The other set of clients is referred to in the art as watchers, and receives the presence information from the presence service. Typically, the watcher is a third party.

Conventional presence services determine their presence information on the basis of limited data. For example, a conventional presence service system may determine the presence information on the basis of an instant messaging program which detects how long a computer keyboard has not been touched, and which accept manual presence status settings.

In telephony, a conventional presence service system may also determine the presence information on the basis of a call status in the network. For example, on the basis of whether the line is busy, idle, has been idle for more than five minutes, etc...

It has been found that conventional presence services provide only limited information. For example, conventional presence services may only provide presence information with respect to whether the presentity is present or not. Conventional presence services do not provide presence information regarding the presence status of the presentity.

It is an object of the present invention to address those problems encountered in conventional presence services. In particular, it is an object to improve communication by providing more accurate presence information on which a third party (watcher) can act.

### Summary of the Invention

According to a first aspect of the invention, there is provided a method of determining presence information about at least one presentity, the method comprising: accessing an audio signal from a terminal associated with the at least one presentity, analysing the audio signal to determine information regarding the presence of the at least one presentity, providing the presence information as a presence service to a third party.

It has been found that by accessing an audio signal from a terminal and analysing the audio signal the accuracy of the presence information is improved. By analysing a variable source, such as the audio signal, the accuracy of the presence information is increased. Further the presence information that can be determined from the audio signal is more detailed with respect to many aspects of the presentity in comparison to conventional presence information. In this way, the quality of the presence information is improved and hence, as a result, communication between a presentity and the third party is improved. In particular, in addition to whether the presentity is present or not, the presence service can provide information regarding the presence status.

One embodiment includes automatically accessing the audio signal. In this way, no action needs to be taken on behalf of the person or entity whose presence is being detected. In particular, by automatically accessing and collecting data which is analysed to determine the presence information, the quality of the presence information is improved without increasing the effort from the user relating to the collection of the data.

In one embodiment, the presence information includes at least one of information regarding whether or not the presentity is present and information regarding the presence status of the presentity. In a further embodiment, the presence status includes at least one of the location of the presentity, the environment in which the presentity is located, the mood of an individual associated with the presentity, information with respect to an activity carried out by the individual of the presentity. In this way, the presence service provides more detailed presence information with respect to at least one of the presentity and the individual associated with the presentity and hence, the communication between at least one of the presentity and the individual associated with the presentity and the third party is further improved.

A further embodiment includes analysing the noise level of the audio signal to determine at least one of the presence and presence status of the presentity. A further embodiment includes analysing the background noise level of the audio signal to determine at least one of the presence and presence status of the presentity. In this way, presence information regarding the location of the presentity can be further determined. For example, if the individual associated with the presentity is in a car, in a meeting, etc, this can be determined by analysing the background noise.

A yet further embodiment includes analysing the acoustic spectrum of the audio signal to determine at least one of the presence and presence status of the presentity. A yet further embodiment includes analysing the audio signal using speech recognition to determine at least one of the presence and presence status of the presentity. In this way, the mood of an individual associated with the presentity can be determined. Further, it can be determined whether the individual is the presentity associated with a particular source.

A further embodiment includes communicating the presence information to the third party subscribed to the presence service.

A further embodiment includes providing after an elapsed time an updated presence information. In this way, the third party is kept up to date with presence information.

According to a second aspect of the present invention, there is provided a presence service system for providing presence information about at least one presentity to a third party which may act on the presence information, the system being arranged to access an audio signal from a terminal associated with the presentity, the presence service system including an audio analyser for analysing the audio signal, wherein the presence service system determines on the basis of the analysed audio signal output by the audio analyser, the presence information regarding the presence of the at least one presentity. In this way, the quality of the information provided by the presence service system to the third party is improved.

In one embodiment, the system is arranged to automatically access the audio signal from the terminal. By automatically accessing and collecting data which is analysed to determine the presence information, the quality of the presence information is improved without increasing overhead relating to the collection of the data.

In a further embodiment, the system includes an acoustic presence detection application for interpreting the audio signal and outputting presence information on the basis of the audio signal and a presence information collection and distribution application for collecting and distributing the presence information.

In a yet further embodiment, the acoustic presence detection application is the presence source. By running the acoustic presence detection application locally on the terminal, bandwidth requirements of the system within a communications network are reduced.

In a further embodiment, the presence information collection and distribution application runs on a network element with which the terminal is networked. In this way, presence information including, for example, location can be determined.

In one embodiment, the system is arranged to access the audio signal from a microphone comprised in the terminal for detecting a sound and converting the sound into the audio signal. In this way, the audio signal is readily available telephony since all telephones have a microphone.

In one embodiment, the presence service system is comprised in a telecommunications service and the terminal includes a telephony device. In this way, the quality of telecommunications is improved and the time wasted trying to communicate with presentities who are not present or whose presence status hinders optimal communication, is cut down.

In a further embodiment, the presence service system is comprised in a broadcasting service and the presentity is a broadcasting station broadcasting the audio signal. In this way, a third party receives presence information which can help him decide whether or not he wishes to listen or watch a particular broadcast programme.

In a further embodiment, the presence service system is arranged to transmit the presence information to a third party subscribed to the presence service. In this way, the third party is provided with the presence information without involving himself directly.

According to a third aspect of the present invention, there is provided a user terminal comprising means operable to perform the method of any of claims 1-10.

According to a fourth aspect of the present invention, there is provided a communications network comprising a terminal, a presence service system being operable to perform the method of any of claims 1-10.

According to a fifth aspect of the present invention, there is provided a computer readable storage medium storing a program which when run on a computer controls the computer to perform the method of any of claims 1-10.

### Brief description of the drawings

In order that the invention may be more fully understood embodiments thereof with now be described by way of example only, with reference to the figures in which:
Figure 1 shows diagrammatically a system according to an embodiment of the present invention, and
Figure 2 shows a method according to an embodiment of the present invention.

### Detailed description

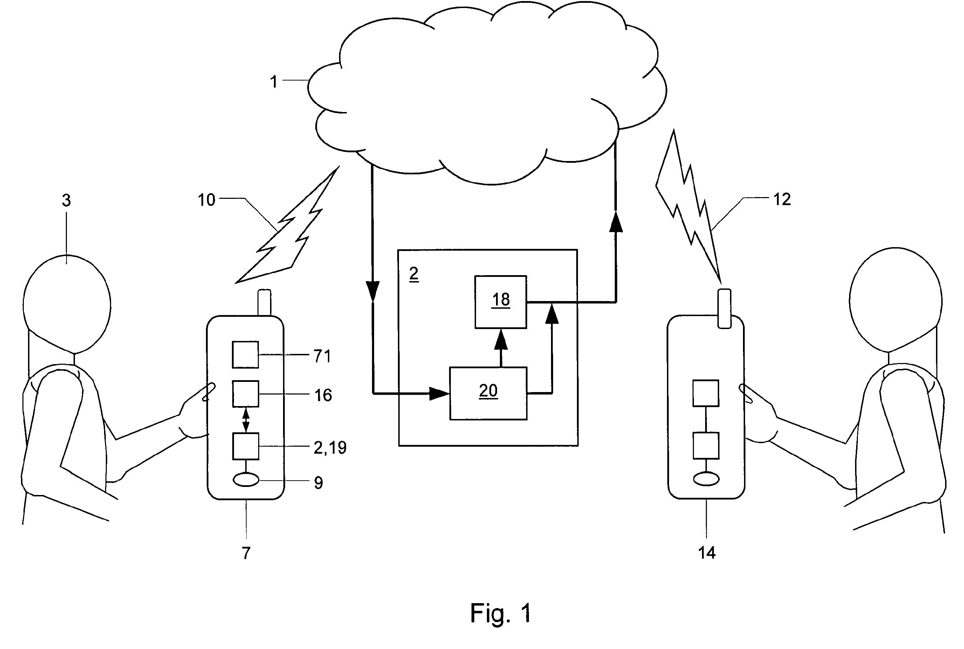

Figure 1 shows diagrammatically a system according to an embodiment of the present invention. The system comprises physical entities 7, 14 and functional entities 16, 19, 20, 71. Physical entities include, but are not limited to, a terminal, for example, a user terminal, such as a telephone 7, 14, a server in the network etc. Functional entities includes, but are not limited to presence sources 19, applications, etc. Functional entities can reside inside one or more physical entities. For example, a presence source 19 can be in a terminal 7, which may include a user terminal or, alternatively, in a terminal, such as a server in the network. In particular, Figure 1 shows a mobile telecommunications system 1 including a presence service system 2 according to an embodiment of the invention. A presentity 3 is an entity based on certain criteria relating to presence. In the embodiment the presentity is based on a combination of userid and availability. In the embodiment shown an individual having the userid is associated with the presentity. The watcher 5 14, is a third party. The presentity 3, 7 and the watcher 5, 14 are subscribed to the presence service. The presentity 3, 7 is an entity whose presence is determined by the presence service system 2. The watcher 5, 14 is the entity who receives the presence information from the presence service system 2. In the embodiment shown, the presentity 7 and the watcher 14 are associated with persons 3, 5. However, the presentity is not limited in this respect. In an alternative embodiment, the presentity may be associated with a broadcasting station broadcasting the audio signal, for example, a radio or television station. Indeed, the present application has application to any presentity having an audio output, for example, fixed telecommunications systems, internet systems etc.. Associated with the presentity 3 is a terminal 7. In the embodiment shown, the terminal 7 has a graphic user interface (GUI) embodied in a mobile telephone handset. The terminal 7 is not limited in this respect and may be embodied in any telephony handset or other device including a graphic user interface, for example a personal digital assistant, a computer, a mobile digital assistant and the like. Alternatively, the terminal may include, but is not limited to, a network element. In such embodiment, the network element may be a mobile service such as a home location registry which indicates which network operator is currently provided, a location server which indicates at which base station the user is located or a mobile switching centre. The terminal 7 may also be a server, for example, a server indicating which internet the user is currently logged into. Presence information may be provided by presence sources. The presence sources include the acoustic presence detection application 19, described in more detail below. The presence source may also include other applications, for example, a corporate calendar or other calendar application provided on a user's computer. The terminal 7 provides an audio signal. The audio signal may be generated by the terminal 7 itself. Alternatively, the audio signal is the output of a detector which detects sound and provides, as its output, the audio signal. The sound may originate from the presentity, for example, a person or persons. The audio signal may also originate from the sounds from the surroundings in which the terminal 7 is located, for example, background noise. In the embodiment, as shown in Figure 1, the detector is a microphone 9 located in the terminal 7. It is not necessary that the microphone 9 be located in the terminal 7. It may also be disposed in the vicinity of the terminal 7 or at a location where the presentity may be located. The microphone 9 detects the sounds and provides as its output an audio signal 10. The audio signal 10 is electrical and may be digital or analogue. In the embodiment shown in Figure 1, the audio signal is a digital signal. The audio signal is accessed by the presence service system 2. It may be accessed automatically. The presence service system 2 may access and analyse the audio signal locally at the terminal 7. Alternatively, the presence service system may access and analyse the audio signal remotely from the terminal 7. The presence service system comprises an acoustic presence detection application 19 which may run on the terminal 7, which, as mentioned above, may include an element in the network. The acoustic presence detection application is a presence source which can run on a terminal, such as a user terminal or a server in the network. Other presence sources include, for example, a busy-state-detection application running on a server in the network, or a manual setting detection application running on a terminal. The acoustic presence detection application 19 access and interprets the audio signal. In the case of a remote analysis of the audio signal and in the case where the acoustic presence detection application runs on the terminal, the audio signal and the signal output by the acoustic presence detection application, respectively, is transmitted via a communications network 1. In the case of a mobile communications network, the audio signal is transmitted over at least part of the network as an electromagnetic signal. In the case of a fixed communications network, the audio signal may be transmitted as an electrical signal and/or, depending on the transmission medium, an optical signal. In one embodiment, the audio signal is transmitted directly to the presence service system 2. The presence service system 2 is arranged to provide presence information 12 to a third party 5. The third party is typically a subscriber to the presence service system 2. The device which presents the presence information to the third party 5 may be referred to in the art as a watcher 14. As with the terminal, the watcher 14 may be a device including a GUI, a network element, a server or an application, or the like. In the embodiment, the watcher 14 is a mobile telephone handset. The presence information may be communicated to the watcher 14 as part of a display on a GUI, as an audio signal, as a voice or text message. Typical watchers include, but are not limited to, telephones, computers, hand held electronic devices, PDAs, electronic calendars, etc.

In the embodiment shown, the presence service system 2 is depicted as a distributed system. The presence service system 2 includes an acoustic presence detection application 19 for interpreting the audio signal and outputting presence information on the basis of the audio signal and a presence information collection and distribution application 20 for collecting and distributing the presence information. The acoustic presence detection application 19 accesses the audio signal from the microphone 9. The acoustic presence detection application 19 may comprise or may interact with an audio analyser 16, which analyses the audio signal. The applications are pieces of software which run on an operating system. For example, the acoustic presence detection application may run on the operating system of the terminal 7. Similarly, the telephone application 71 runs on the telephone 7. In Figure 1, part of the system 2 is depicted as a separate entity to the network 1. However, in an alternative embodiment, the presence service system 2 is comprised in the network 1. In Figure 1, part of the system, the audio analyser 16 and the acoustic presence detection application 19 may be comprised in the terminal 7. The presence service system 2 typically comprises a computer comprising a data storage device and a processing device for computing the presence information. As mentioned, the presence service system may further comprise an audio analyser 16. Depending on the type of presence information desired, the audio analysis is carried out accordingly. For example, the audio analyser 16 may be at least one of a noise level analyser, an acoustic spectrum analyser and a speech recognition analyser. In one embodiment, the presence information indicates to the subscriber 5 the identity of the individual associated with the presentity 3. This may be carried out by speech analysis. Speech analysis may also be carried out on the signal to identify the mood or temperament of the individual associated with presentity. If the mood of the individual associated with the presentity is detected as being bad, the subscriber may then decide to delay calling the individual associated with the presentity 3. Such mood related data can be further processed by the presence service system 2 in a processing module 18 to determine the interest level of the individual associated with the presentity during a conversation, since it has been found that such information can be determined by analysing a person's speech patterns. A noise level analyser can be used to determine, for example, the environment in which the presentity 3 is located. Further, a background noise level analyser determines where the presentity is located. For example, if the presentity is located in a car, outside, in a meeting etc, the location can be determined by analysis of the background noise. If it is determined that the presentity 3 is in a meeting, the subscriber may wish to delay calling the individual associated with the presentity 3 until the meeting is over. Depending on the analysis to be carried out, a bandwidth limiter may be provided. The analysis may include a simple over-all loudness detection analysis to determine the loudness of background noise, a single spectral analysis and correlation check of the recorded spectrum and some reference spectra may be carried out to identify the type of background noise, for example, a car, train, etc. Further, several spectral analyses may be combined over a (short) period of time to identify more presence information with respect to ambient sounds. Further a specific audio analysis may be carried out to determine, for example, enthusiasm, or other mood related behaviour, detection. Further, a speech recognition analysis may be carried out to recognize words, language, specific speakers etc. Further, a full audio analysis may be carried out, wherein the analysis may be tuned to recognise and distinguish specific situations, for example, the difference between a two-person conversation and a meeting.

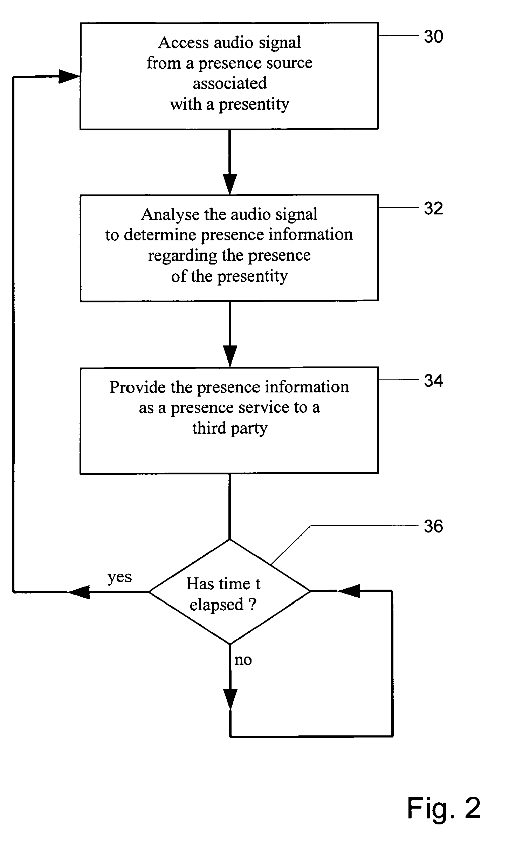

Figure 2 shows a method according to an embodiment of the present invention. In particular, Figure 2 shows the processing steps carried out by the presence service system 2. The presence service system 2 accesses an audio signal from a terminal 7 associated with a presentity (step 30), it analyses the audio signal to determine presence information regarding the presence of the presentity (step 32), it subsequently provides the presence information as a presence service to a third party (step 34). The presence service system 2 may include an update facility, wherein after a predetermined elapsed time (step 36), the presence service system will determine an updated presence information which will also be provided to the third party. In this way, the third party is provided with up to date presence information. The third party may determine the elapsed time. Alternatively, it may be set by the presence service provider. Depending on the application and the subscribers, the time elapsed may vary from a few minutes to several hours. The elapsed time may not be constant, but may vary, for example, depending on the time of day.

Whilst specific embodiments of the invention have been described above, it will be appreciated that the invention may be practiced otherwise than as described. The description is not intended to limit the invention.

## Claims

1. A method of determining presence information about at least one presentity, the method comprising:
- accessing an audio signal from a terminal associated with the at least one presentity;
- analysing the audio signal to determine information regarding the presence of the at least one presentity;
- providing the presence information as a presence service to a third party.

2. A method according to claim 1, including automatically accessing the audio signal.

3. A method according to claim 1 or 2, wherein the presence information includes at least one of information regarding whether or not the presentity is present and information regarding the presence status of the presentity.

4. A method according to claim 3, wherein the presence status includes at least one of the location of the presentity, the environment in which the presentity is located, the mood of an individual associated with the presentity, information with respect to an activity carried out by the individual of the presentity.

5. A method according to any of preceding claims, including analysing the noise level of the audio signal to determine at least one of the presence and presence status of the presentity.

6. A method according to claim 5, including analysing the background noise level of the audio signal to determine at least one of the presence and presence status of the presentity.

7. A method according to any of preceding claims, including analysing the acoustic spectrum of the audio signal to determine at least one of the presence and presence status of the presentity.

8. A method according to any of the preceding claims, including analysing the audio signal using speech recognition to determine at least one of the presence and presence status of the presentity.

9. A method according to any of the preceding claims, including communicating the presence information to the third party subscribed to the presence service.

10. A method according to any of the preceding claims, including providing after an elapsed time an updated presence information.

11. A presence service system for providing presence information about at least one presentity to a third party which may act on the presence information, the system being arranged to access an audio signal from a terminal associated with the presentity, the presence service system including an audio analyser for analysing the audio signal, wherein the presence service system determines on the basis of the analysed audio signal output by the audio analyser, the presence information regarding the presence of the at least one presentity.

12. A system according to claim 10, wherein the presence service system is arranged to automatically access the audio signal from the terminal.

13. A system according to claim 11 or 12, wherein the presence service system includes a presence application for interpreting the audio signal and outputting presence information on the basis of the audio signal and a presence information collection and distribution application for collecting and distributing the presence information from at least one presence source.

14. A system according to claim 13, wherein the acoustic presence detection application is a presence source.

15. A system according to claim 13, wherein the presence information collection and distribution application runs on a network element with which the terminal is networked.

16. A system according to any of preceding claims 11-15, wherein the presence information includes at least one of information regarding whether or not the presentity is present and information regarding the presence status of the presentity.

17. A system according to any of preceding claims 11-16, wherein the system is arranged to access the audio signal from a microphone comprised in the terminal for detecting a sound and converting the sound into the audio signal.

18. A system according to claim any of preceding claims 11-17, wherein the audio analyser is a noise level analyser whose output is used to determine the presence status of the presentity.

19. A system according to any of preceding claims 11-18, wherein the audio analyser is a background noise level analyser whose output is used to determine the presence status of the presentity.

20. A system according to any of preceding claims 11-19, wherein the audio analyser is an acoustic spectrum analyser whose output is used to determine the presence status of the presentity.

21. A system according to any of preceding claims 11-20, wherein the audio analyser is a speech recognition analyser whose output is used to determine the presence status of the presentity.

22. A system according to any of preceding claims 11-21, wherein the presence service system is comprised in a telecommunications service and the terminal includes a telephony device.

23. A system according to any of preceding claims 11-22, wherein the presence service system is comprised in a broadcasting service and the terminal is a broadcasting station broadcasting the audio signal.

24. A system according to any of preceding claims 11-23, wherein the presence service system is arranged to transmit the presence information to a third party subscribed to the presence service.

25. A user terminal comprising means operable to perform the method of any of claims 1-10.

26. A communications network comprising a terminal, a presence service system being operable to perform the method of any of claims 1-10.

27. A computer readable storage medium storing a program which when run on a computer controls the computer to perform the method of any of claims 1-10.
